# EUROPEAN PATENT SPECIFICATION

(11) **EP 1 642 804 B1**
(45) Date of publication and mention of the grant of the patent: **20.02.2008**
(21) Application number: 05077170.8
(22) Date of filing: 23.09.2005
(51) Int. Cl.: B62D 1/04, B62D 7/22, F16F 7/10, F16F 15/02, B62D 1/11, B62D 1/08

(54) **Steering wheel torsional vibration damper**
Lenkraddrehschwingungsdämpfer
Amortisseur de vibrations torsionelles de volant

(30) Priority: 01.10.2004 US 615448 P
(43) Date of publication of application: 05.04.2006
(73) Proprietor: Delphi Technologies, Inc., Troy, MI 48007 (US)
(72) Inventor: Worrel, Barry C., Centerville, OH 45458 (US); Lewis, Thomas M., Liberty Township, OH 45011 (US); Tadavarthi, Shankar N., Mishawaka, IN 46545 (US)
(74) Representative: Denton, Michael John

(56) References cited:
- DE-B- 1 209 894
- DE-C- 455 137
- GB-A- 254 734
- PATENT ABSTRACTS OF JAPAN vol. 2002, no. 09, 4 September 2002 (2002-09-04) -& JP 2002 145075 A (HONDA MOTOR CO LTD), 22 May 2002 (2002-05-22)
- PATENT ABSTRACTS OF JAPAN vol. 2000, no. 26, 1 July 2002 (2002-07-01) -& JP 2001 239943 A (HONDA MOTOR CO LTD; TOKAI RUBBER IND LTD), 4 September 2001 (2001-09-04)

## Description

### TECHNICAL FIELD

This present invention relates generally to a method and apparatus for providing a torsional vibration damper and more specifically, the present invention relates to a torsional vibration damper for use with a steering wheel.

### BACKGROUND OF THE INVENTION

A steering assembly for a vehicle typically includes a steering wheel operatively connected to a steering column, which is operatively connected to wheels of the vehicle. As the vehicle travels over different road conditions and at various speeds there is vibrational input to the steering assembly and ultimately the steering wheel. These vibrational inputs include but are not limited to idle shake, rough road, and vehicle system resonance. Typically, this vibration occurs in the range of 10-20 Hz, which correlates to 60-80 mph. In order to eliminate this vibration there is a desire to provide a tuned vibration absorber to the rim and/or spokes of the steering wheel.

Accordingly, there is a desire to dampen the vibration in the steering assembly so that it is not perceivable to the vehicle operator whose hands are on the steering wheel. Therefore, it is desirable to provide a torsional damper that will eliminate undesired vibrations in the steering wheel.

Such a device is known for example from the JP 2002145075 A.

### SUMMARY OF THE INVENTION

Disclosed herein is a method and apparatus for preventing torsional vibration input into a steering wheel of a vehicle.

An exemplary embodiment comprises a vibration dampening device configured for mounting to a steering wheel, comprising: a pair of masses each having a pair of springs mounted thereto, each spring comprising a pair of mounted ends; a pair of mounting members each being configured to receive and engage one of the pair of mounting ends of the pair of springs, wherein, the vibration dampening device reduces the torsional vibration input into the steering wheel.

Another exemplary embodiment comprises a steering wheel for a vehicle, comprising: a steering wheel frame having an inner hub, an outer rim and a pair of spokes connecting the inner hub with the outer rim; a pair of vibration dampening devices one for each of the pair of spokes, each vibration mounting device comprising: a pair of masses each having a pair of springs mounted thereto, each spring comprising a pair of mounted ends; a pair of mounting members each being configured to receive and engage one of the pair of mounting ends of the pair of springs, wherein, the vibration dampening device reduces the torsional vibration input into the steering wheel.

A method for dampening vibrations in a steering wheel of a vehicle, comprising: locating a pair of vibration damping devices on a lower surface of the steering wheel; disposing one of each of the pair of vibration damping devices in a receiving area disposed within a spoke of the steering wheel, the receiving area being configured to allow movement of the vibration damping device therein; and covering each vibration damping device with a shroud that comprises a portion of the exterior surface of the lower surface of the spoke of the steering wheel wherein the pair of vibration dampening devices are configured for movement in directions corresponding to radial movement of the steering wheel, wherein the vibration damping devices are tuned to provide dampening frequencies.

The above-described and other features of the present disclosure will be appreciated and understood by those skilled in the art from the following detailed description, drawings, and appended claims.

### BRIEF DESCRIPTION OF THE DRAWINGS

Figure 1 is a partial view of a vehicle interior;
Figure 2 is a perspective view of a steering wheel frame;
Figure 3 is a perspective view of a torsional vibration damper in accordance with an exemplary embodiment of the present invention;
Figures 4-9 illustrates an assembly sequence of the torsional vibration damper illustrated in Figure 3;
Figures 10-13 are perspective views of a torsional vibration damper of an exemplary embodiment of the present invention secured to a portion of a steering wheel;
Figures 14 and 15 are partial perspective views of a steering wheel contemplated for use with a torsional vibration damper of an exemplary embodiment of the present invention; and
Figures 16A-16C are schematic illustrations of alternative exemplary embodiments of the present invention.

### DESCRIPTION OF THE PREFERRED EMBODIMENT

Disclosed herein is a method and apparatus for providing a tuned vibration absorber (TVA). As will be discussed herein a tuned vibration absorber refers to a vibration damping device configured to dampen vibrations of a specific configuration or frequency. In accordance with an exemplary embodiment of the present invention, the TVA will act as a torsional vibration damper and more specifically, an exemplary embodiment of the present invention relates to a torsional vibration damper for use with a steering wheel.

A Tuned Vibration Absorber can be designed to operate at any discrete frequency within a wide range of frequencies. In essence, a TVA is a mass/spring system tuned to the frequency of the excitation force. When appropriately located on a vibrating structure, a system of TVAs or a single TVA will act as an energy sink or adsorber reducing the vibratory motion associated with the vibrating structure.

Exemplary embodiments of the present invention are directed to TVAs of a compact design, which are tuned to specific frequencies and can provide consistent performance under various operating conditions including various temperatures. Exemplary embodiments are directed to a torsional vibration damper that is easily manufactured and installed to an underside of a steering wheel in order to provide the desired vibration damping. Of course, other locations are contemplated to be within the scope of exemplary embodiments of the present invention.

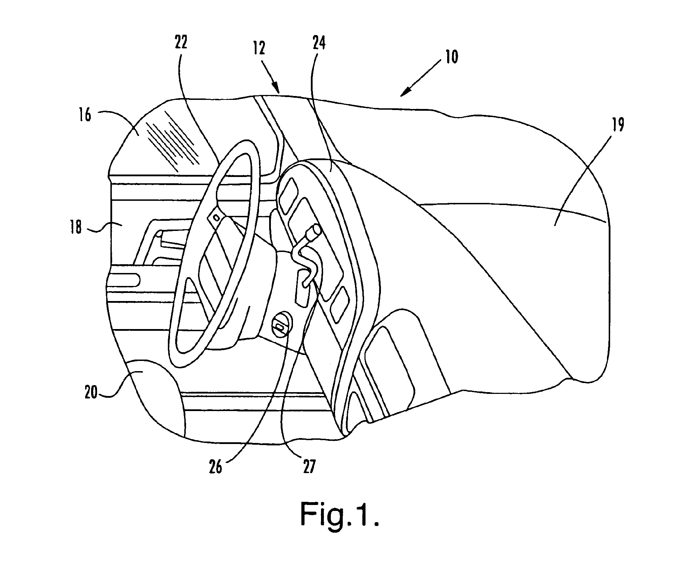

Referring to the drawings and in particular Figure 1, a steering assembly 10 is illustrated in a vehicle (partially shown) such as a motor vehicle, generally indicated at 12. The motor vehicle 12 includes an engine compartment 14 and occupant compartment 16. The occupant compartment 16 is accessible via a door 18 and includes a seat 20 in which an occupant, namely the driver, may sit. The steering assembly 10 includes a steering wheel 22 spaced from an instrument panel 24 in the occupant compartment 16. The dampened steering assembly 10 includes a steering column 26 connected to the steering wheel 22 and extending through the occupant compartment 16 into the engine compartment 14. The steering column 26 includes a shifting lever 27 used to control a transmission (not shown) of the motor vehicle 12. It should be appreciated that the steering column 26 is operatively connected to wheels (not shown) of the vehicle. It should also be appreciated that an operator's hands (not shown) typically grip the steering wheel 22 to guide the vehicle 12 in the desired direction.

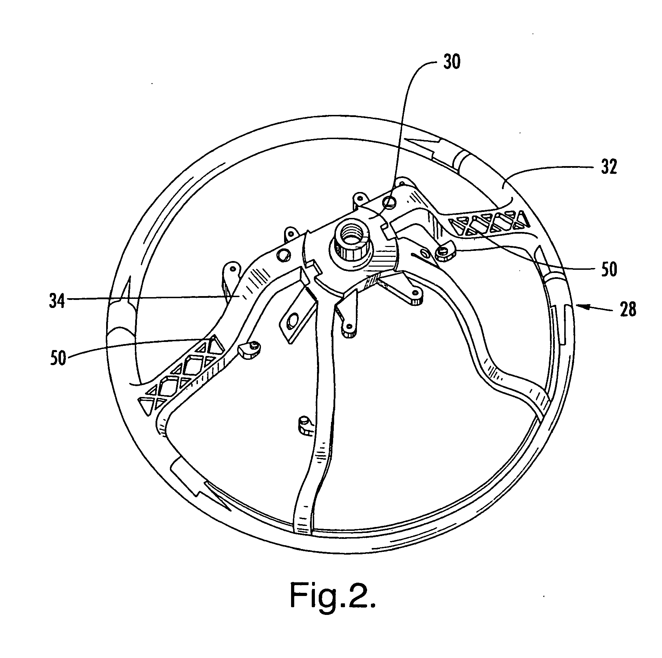

Referring now to Figures 1 and 2, steering wheel 22 comprises a frame 28 that defines the shape of the steering wheel. In an exemplary embodiment, the frame is made from a metal material such as magnesium. Of course, other materials are contemplated to be within the scope of the present invention. The steering wheel includes a hub or inner rim 30, an outer rim 32 circumscribing the inner rim and at least one spoke 34 interconnecting the inner rim with the outer rim. The frame 28 of the inner rim, outer rim, and spokes is integral and one-piece.

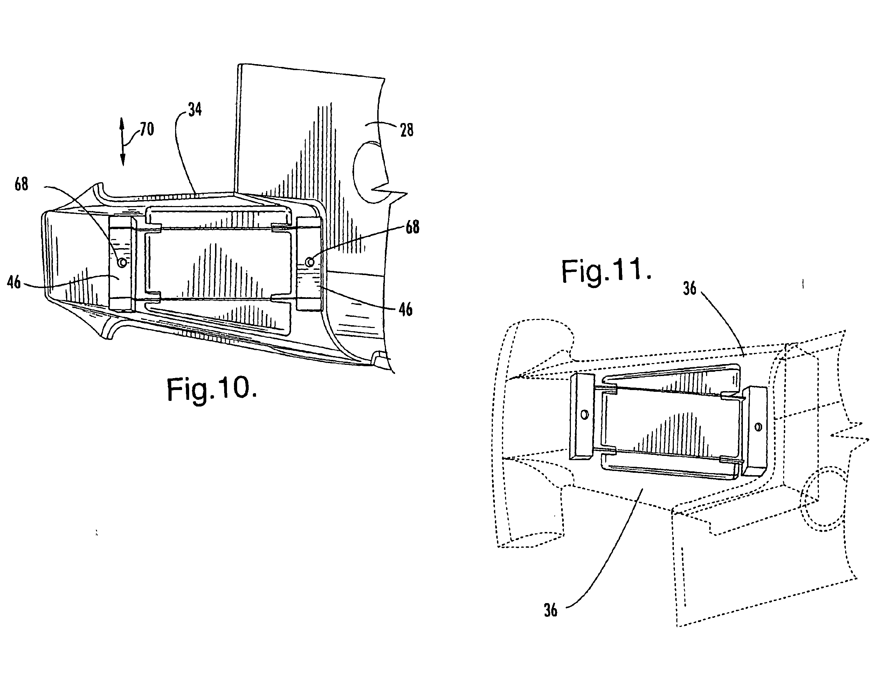

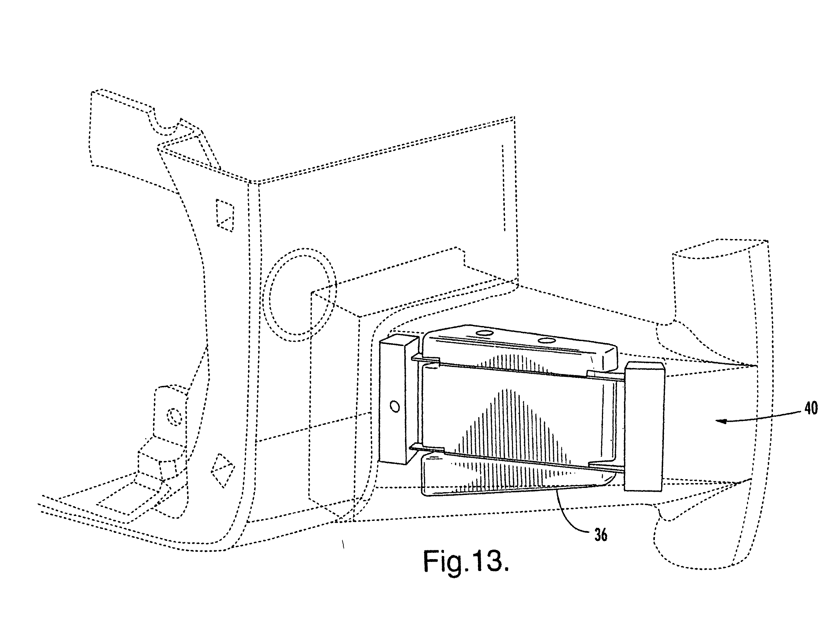

In one exemplary embodiment, the steering wheel also includes a lower shroud 36 (Figures 11 and 13) that encloses a portion of the frame having the torsional vibration damper mounted thereto. In one non-limiting example, the lower shroud is formed from a material such as urethane or plastic and comprising a portion of the exterior surface of the steering wheel. In an alternative exemplary embodiment an outer decorative layer (e.g., foam, vinyl, leather, wood, etc.) is disposed over the shroud or other portions of the steering wheel.

In accordance with an exemplary embodiment the mass is supported off of two springs mounted rigidly in four corners. In one exemplary embodiment, a mass is mounted to each of two spokes of a steering wheel. In accordance with an exemplary embodiment the springs are coated with a polymer that provides damping wherein a wider band of vibration frequencies can be addressed than those with uncoated springs.

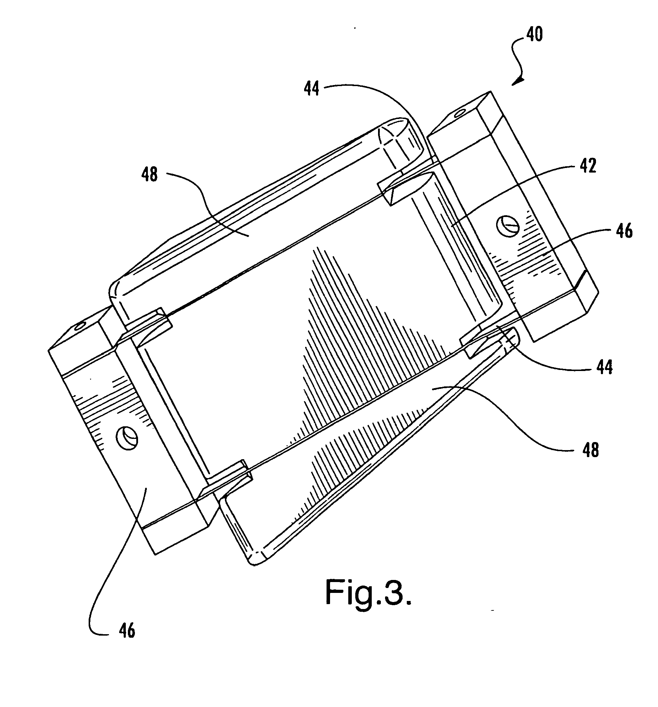

Referring now to Figures 2 and 3, a tuned vibration absorber (TVA) or torsional vibration damper 40 of an exemplary embodiment of the present invention is illustrated. Torsional vibration damper 40 comprises a mass 42, a pair of springs 44 and a pair of mounting blocks 46. In accordance with an exemplary embodiment mass 42 also includes a pair of shrouds or upper and lower mass portions 48. In accordance with an exemplary embodiment of the present invention each spring is formed from high carbon steel having a polymer coating applied to both sides to provide the damping. The polymer coating of the spring provides a wider band of dampening along a desired frequency. Exemplary examples of materials contemplated for use as mass 42 and upper and lower mass portions 48 include but are not limited to the following: steel, iron, iron copper, iron copper tungsten, powdered metals, nylon, nylon loaded with any of the aforementioned metals and any combination thereof. Loaded polymers allow for high densities and various configuration possibilities. In addition, powdered metals also allow for wide metal selections, high densities and various configuration possibilities.

In addition, and in accordance with an exemplary embodiment, three different materials may be used for mass 42 and upper and lower mass portions 48 thus, and as applications require (e.g., space requirements) different sized masses with various configurations and masses can be used (e.g., three different masses 42 and 48) will provide variability in the designs.

In accordance with an exemplary embodiment a pair of torsional vibration dampers 40 are positioned on an underside portion 50 of a spoke of the steering wheel, each being secured to the spoke of the steering wheel by passing bolts or other mounting means through the mounting blocks 46 to secure the same to the steering wheel, wherein the masses and the operational frequency of the dampers are optimized for a specific vehicle application. In other words the vibration dampers are tuned to cancel out vibrations of a specific frequency. Thus, and in accordance with an exemplary embodiment and depending on the vehicular application (column stack data), the vibration dampers are tuned to cancel out undesirable vibrations (e.g., those that would be felt by the vehicle operator) by being configured to move in a specific direction with respect to the steering wheel. For example, in one embodiment the vibration frequency of a vehicle steering wheel is determined and the vibration dampers are tuned to cancel out those frequencies.

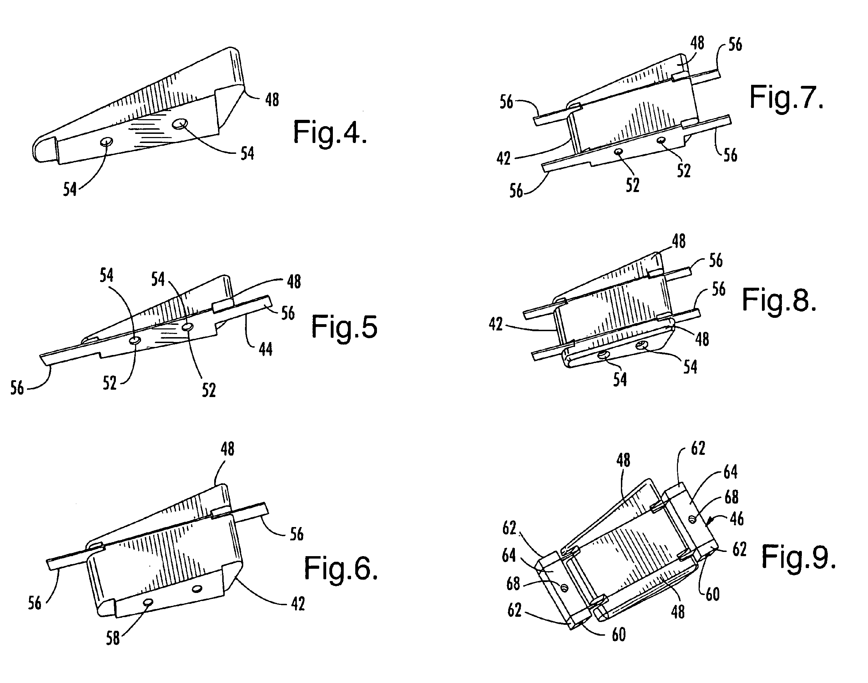

In accordance with an exemplary embodiment, Figures 4-9 illustrate the assembly sequence of the torsional vibration damper. Figure 4 illustrates an upper or lower mass member 48, which is configured for its securement to the steering wheel spoke (e.g., triangular shape). Of course, and as applications require, many configurations are possible. Figure 5 illustrates upper or lower mass member 48 with a spring member 44. In accordance with an exemplary embodiment spring member 44 is a planar member with a pair of openings 52 for aligning with a pair of openings 54 of upper or lower mass member 48. Each spring member comprises a pair of ear or mounting portions 56 for securing the same to mounting member 46. Figure 6 illustrates the mass 42 positioned on one of the springs and Figure 7 illustrates the second spring positioned on the mass. Mass 42 also comprises a pair of openings 58 for aligning with openings 52 and 54. Figure 8 illustrates a second upper or lower mass member 48 positioned upon one of the springs wherein each of the openings of the mass, the springs and the upper or lower masses are aligned so that a pair of mounting bolts (not shown) can pass therethrough. Also noted and as illustrated in accordance with an exemplary embodiment, one of the upper or lower mass members has a larger volume than the other (e.g., triangular versus rectangular), which may assist in providing a configuration that has the required mass and shape for movement in the available real estate of the lower surface of the spokes. Moreover, by utilizing three different masses each having a different configuration the torsional vibration damper is easily configured for a variety of applications (e.g., steering wheels of various configurations) as each portion may comprise a different material or mass.

Figure 9 illustrates the securement of the mounting members 46 to the ear portions 56 of the spring members. As illustrated ear portions 56 are secured to the mounting members by passing a plurality of screws or other securement members (not shown) through openings 60 in the end portions of the mounting members wherein the ear portions are secured to the mounting member 46 by compressing and securing an end portion 62 of the mounting member against a central portion of the mounting member wherein the ear portions of the springs are secured therebetween or alternatively the screw passes through an opening in the ear portion as well as a threaded opening of a central portion 64 of the mounting member. Each central portion 64 comprises an opening 68 for securement of the mounting member and ultimately the torsional vibration damper to the spoke of the steering wheel.

Figure 10 illustrates the torsional vibration damper secured to the underside of a spoke 34 of a frame of the steering wheel. Accordingly, the masses are mounted to the steering wheel by mounting member 46 wherein four spring ends (two on each side) secure the mass to the steering wheel. As illustrated the mounting members 46 are secured to the underside of the spoke by passing screws through opening 68 which are received in complementary threaded openings of the spoke of the steering wheel. As illustrated, the torsional vibration damper is configured or tuned for movement in the direction illustrated by arrows 70, which corresponds to radial movement of the steering wheel. In particular, this is due to the use of planar springs 44 which are configured for movement in the direction of arrows 70 when the vibration damper is mounted to the steering wheel.

Of course, it is understood that the torsional vibration damper is configured to have movement in directions other than those represented by arrows 70 as long as vibrations of the steering column are canceled out by the torsional vibration damper.

Figure 11 illustrates the torsional vibration damper enclosed within the lower shroud 36 of the steering wheel. In accordance with an exemplary embodiment, lower shroud 36 and the portion of the steering wheel the torsional vibration damper is secured to is configured to provide a receiving area large enough so that the damping movement of the torsional vibration damper is allowed (e.g., in the directions of arrows 70), which is in an exemplary embodiment, the rotational direction of the steering wheel. Accordingly, lower shroud 36 and steering wheel frame 28 are each configured to allow movement of the torsional vibration damper while the same is enclosed therein. Accordingly and in accordance with an exemplary embodiment, a steering wheel is provided wherein each vibration damping device is mounted to a receiving area disposed in a lower surface of the spokes, wherein each spoke comprises at least a pair of walls for defining the receiving area and the receiving area is configured to allow movement of the vibration damping device therein and each vibration device is enclosed within the receiving area by a lower shroud that comprises a portion of the exterior surface of the lower surface of the spokes.

In an alternative exemplary embodiment the torsional vibration dampers are enclosed in the receiving area by foaming over the receiving area with a urethane foam wherein the characteristics of the foam are such that the masses will be able to move within the foam or alternatively, the foam will enclosed the receiving area without making contact with the torsional vibration dampers thereby allowing for movement within the receiving area after the foam has enclosed the torsional vibration dampers therein.

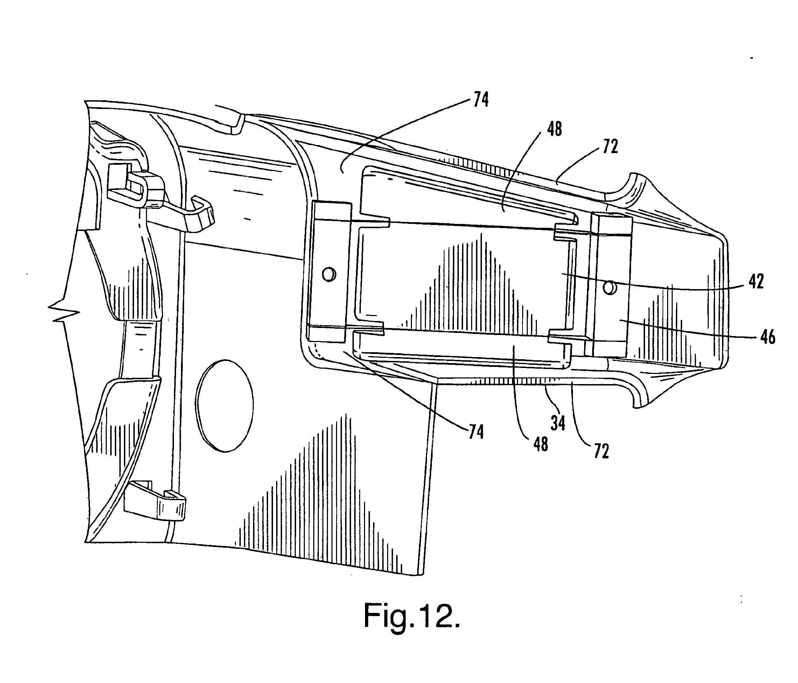

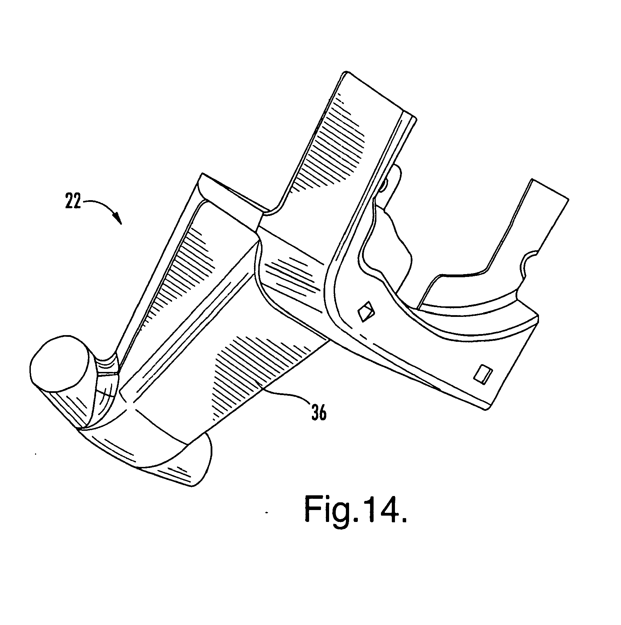

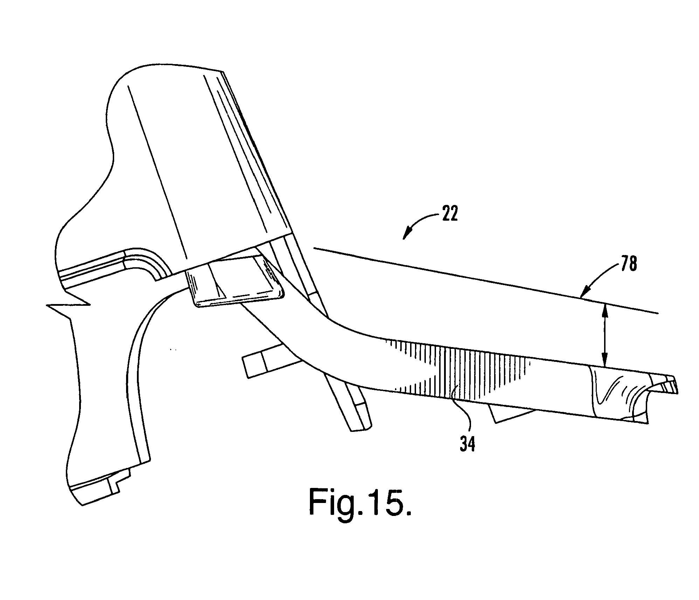

Figure 12 illustrates the torsional vibration damper secured to the frame of the steering wheel prior to the securement of the lower shroud thereto. As illustrated, spoke 34 comprises a pair of walls 72 for defining a receiving area 74 into which the torsional vibration damper can be secured. Figure 13 illustrates the torsional vibration damper 40 enclosed within lower shroud 36 and in area 74. Figure 14 is a partial perspective view of a steering wheel with the torsional vibration damper secured therein. Figure 15 illustrates a portion of a steering wheel illustrating the spoke portion where the torsional vibration damper is to be secured and the amount of foam or height of shroud required to encase the vibration damper therein is illustrated by reference numeral 78.

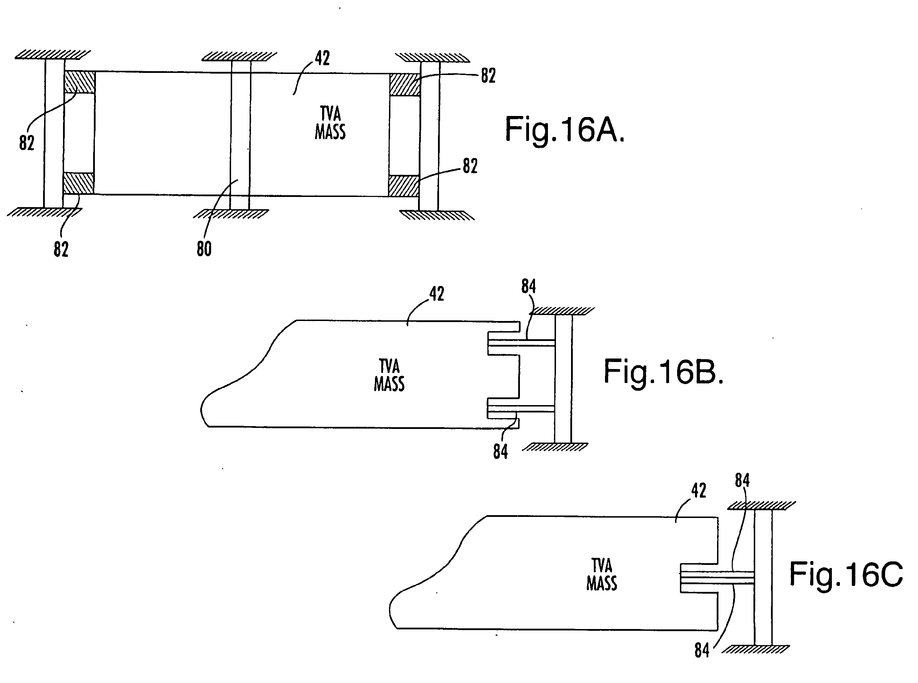

Figures 16A-16C illustrate alternative embodiments of the present invention wherein the tuned vibration absorber masses are each secured to the steering wheel in alternative configurations. In Figure 16A the securement of the mass to the steering wheel is facilitated by a nylon bearing 80 and polyurethane foam 82 is disposed on either side to allow for the mass to move. In Figure 16B two beam springs 84 are secured to each end of the mass and each beam spring is also secured to the steering wheel. In Figure 16C a single spring 84 is secured to each end of the mass and each spring is also secured to the steering wheel.

Below are assembly steps and criteria for exemplary embodiments of the present invention. In accordance with exemplary embodiments, the mass of each torsional vibration damper is approximately within the ranges shown below. Of course, and as applications may require, the masses of each of the torsional vibration dampers may be greater or less than those illustrated in the attached Figures and below. In addition, and in accordance with an exemplary embodiment, the torsional vibration dampers are in one non-limiting embodiment tuned to provide dampening at frequencies in the range of 11Hz to 17 Hz encountered by the steering wheel. One non-limiting exemplary frequency was found to be 15.75 Hz. Of course, and as applications may require different steering wheel configurations and road conditions may require torsional vibration dampers tuned to provide dampening at frequencies greater or less than the aforementioned range.

Performance analysis for certain applications has determined that two torsional vibration dampers tuned to approximately 15 Hz each weighing approximately 250 grams and being disposed on either side of the steering wheel have yielded promising results. The steering wheel position corresponding to the aforementioned embodiment is when the vehicle wheels are positioned to cause the vehicle to travel in a straight path. Of course, and as applications may require different steering wheel configurations and road conditions may require torsional vibration dampers having masses greater or less than the aforementioned values.

The actual math data and system constraints (column stalks) will determine the packaging space and materials required to provide the minimum 250 g mass or other required weight on each side of the steering wheel wherein the left and right prefers to upper and lower portions 48 and middle refers to mass 42.

**Exemplary Examples of Torsional Vibration Dampers**

| | | | | | | | |
|---|---|---|---|---|---|---|---|
| | | | | | | | |

| Left | | Middle | | Right | | Mass | Total Mass |
|---|---|---|---|---|---|---|---|
| Volume | Mass Density | Volume | Mass Density | Volume | Mass Density | g | g |
| 9.642 | 6.0 | 20.9 | 6.0 | 5.83 | 6.0 | 218 | 436 |
| 9.642 | 7.0 | 20.9 | 7.0 | 5.83 | 7.0 | 255 | 509 |
| 9.642 | 7.7 | 20.9 | 7.7 | 5.83 | 7.7 | 280 | 560 |
| 9.642 | 8.0 | 20.9 | 8.0 | 5.83 | 8.0 | 291 | 582 |
| 9.642 | 9.0 | 20.9 | 9.0 | 5.83 | 9.0 | 327 | 655 |
| 9.642 | 10.0 | 20.9 | 10.0 | 5.83 | 10.0 | 364 | 727 |
| 9.642 | 11.0 | 20.9 | 11.0 | 5.83 | 11.0 | 400 | 800 |
| 9.642 | 7.7 | 20.9 | 6.0 | 5.83 | 7.7 | 245 | 489 |
| 9.642 | 7.7 | 20.9 | 7.0 | 5.83 | 7.7 | 265 | 531 |
| 9.642 | 7.7 | 20.9 | 8.0 | 5.83 | 7.7 | 286 | 573 |
| 9.642 | 7.7 | 20.9 | 9.0 | 5.83 | 7.7 | 307 | 614 |
| 9.642 | 7.7 | 20.9 | 10.0 | 5.83 | 7.7 | 328 | 656 |

As illustrated above the mass densities of the masses will affect the total mass of the vibration dampers.

The processing steps can be summarized as follows: insert 3 mass components (left, right and middle) and 2 springs in assembly fixture; add two nuts; drive two screws; add assembly blocks or mounting member; drive 1 screw into each end; place two dampers into a shroud; screw into the shroud; and check frequency response of each damper.

Below are examples of various spring components.

| Damper tuned to 15 Hz using the formula below 2π(f) = √(K/m) Assume Volume of the tuned vibration absorber (TVA) Mass to be approximately (1.25") x (2.5") x (0.375") = 1.17in ^3 | | | |
|---|---|---|---|
| Mass | K | Density | Material |
| 0.27 lb | 6.21 lb/in | 0.2835 lb/in^3 | Steel |
| 0.33 lb | 7.59 lb/in | 0.2835 lb/in^3 | Steel |
| 0.47 lb | 10.8 lb/in | 0.4 lb/in^3 | Lead |
| 0.47 lb | 10.8 lb/in | 0.4 lb/in^3 | Titanium Copper |
| 0.47 lb | 10.8 lb/in | 0.397 lb/in^3 | Loaded Nylon |
| 0.82 lb | 18.9 lb/in | 0.70 lb/in^3 | Tungsten Carbide |

| Exemplary example using 20 Durometer Polysiloxane Molded Elastomer Springs wherein: G = 50 psi Assume A = (0.25") x (0.25") x 4 = 0.25 in^3 G=Kt/A | |
|---|---|
| Mass | Required thickness |
| 0.23 lb | 1.6 in |
| 0.47 lb | 1.16 in |
| 0.82 lb | 0.66 in |

| Exemplary example using Foam Springs wherein: G = 10 psi Assume A = (0.25") x (0.25") x 4 = 0.25 in^3 G=Kt/A | |
|---|---|
| Mass | Required thickness |
| 0.23 lb | 0.33 in |
| 0.47 lb | 0.23 in |
| 0.82 lb | 0.13 in |

| | | |
|---|---|---|
| Exemplary example using Flat Steel (Cantilever) Springs wherein K = (E b h ^3)/(4 L ^3) B = width H = thickness = (0.006") L = length Note: The steel spring concepts are good because the fore-aft stiffness and the lateral stiffness will be very high, yet the vertical stiffness will be low | | |

| 4 Springs - Located at each corner of the TVA Mass | | |
|---|---|---|
| Mass | Length | Calculated Width |
| 0.33 lb | 0.25 in | 0.005 in |
| 0.33 lb | 0.50 in | 0.146 in |
| 0.47 lb | 0.50 in | 0.210 in |
| 0.82 lb | 0.25 in | 0.011 in |
| 0.82 lb | 0.50 in | 0.360 in |
| | | |

| 2 Springs - Located at Midpoint of Each Edge of the TVA Mass | | |
|---|---|---|
| Mass | Length | Calculated Width |
| 0.33 lb | 0.50 in | 0.29 in |
| 0.47 lb | 0.50 in | 0.42 in |
| Note: Static Deflection = (0.33 lb)/(7.59 lb/in) = 0.043 in | | |

Below is a non-limiting example of a Tuned Vibration Absorber (TVA) design and analysis for a particular steering wheel.

### BASELINE MODEL DEVELOPMENT AND CORRELATION

A model of a steering wheel was built using the ANSYS finite element analysis (FEA) package according to the mass and stiffness specifications of the steering wheel. Graph 1 shows the comparison of the experimental frequency response measured on the steering wheel (in torsion) with the predicted response.

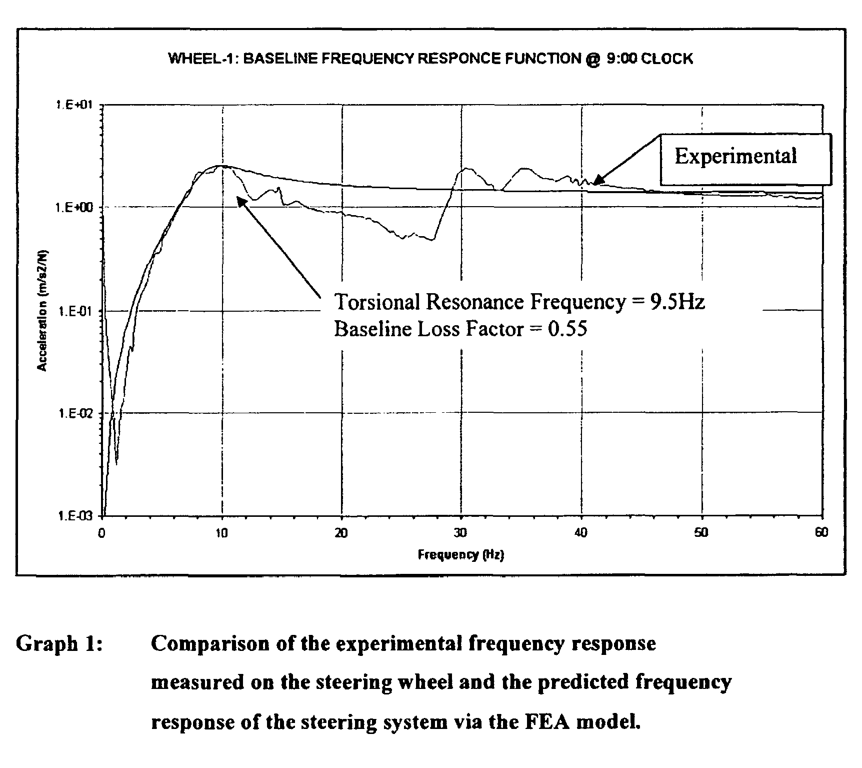

### CONCEPTUAL TVA DESIGN AND PREDICTION

Using the DTI FEA model representation of the steering system, dead weights were analytically added to the steering wheel spokes and to the rim to measure the attenuation in the frequency response function. Graph 2 below shows the performance improvement.

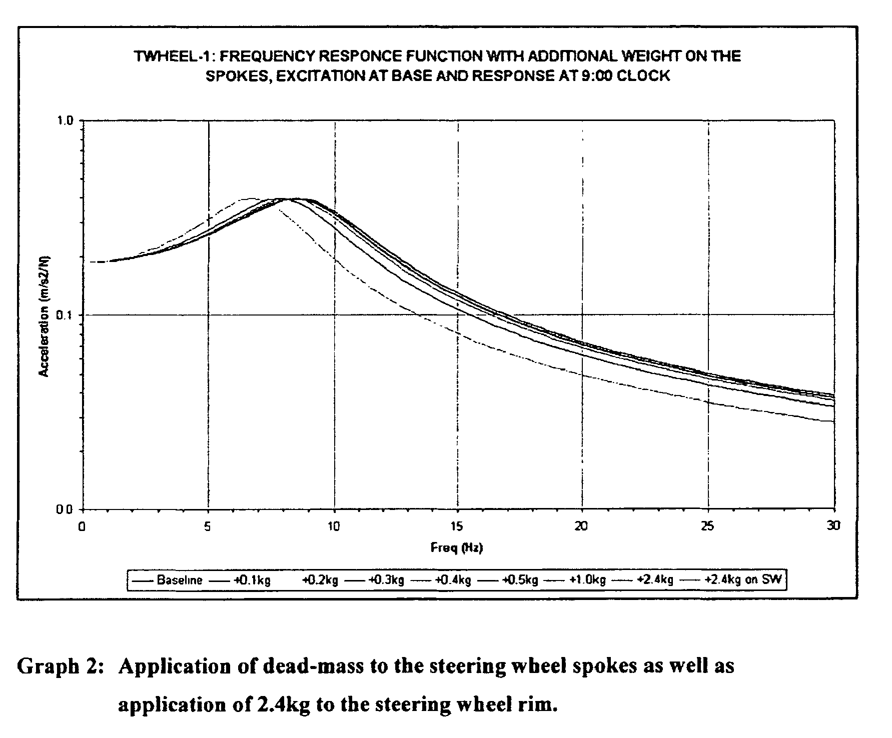

To calculate the additional performance gain using a TVA, the baseline loss factor (LF) of the steering wheel system was reduced to 0.05 LF. This change causes the amplitude of the steering wheel torsional mode to increase. Since the torsional mode of the steering system is not within the frequency range of interest from 11.0 Hz to 15.7 Hz, it is assumed that the LF for the steering wheel system will have minimal effect on the results. The predicted compliance of the steering system in the 11.0 Hz to 15.75 Hz region is nearly identical for LF = 0.05 and LF = 0.55. Essentially, this issue is a non-resonance issue.

Graph 3 describes the location of the torsional mode as well as the sphere-of-influence of the conceptual TVA.

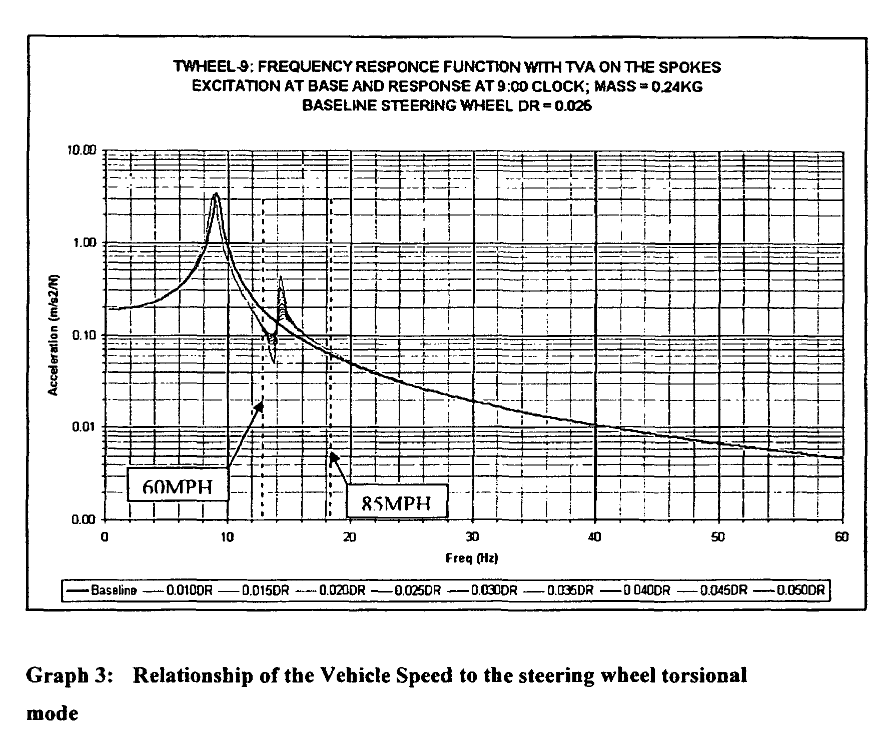

The conceptual TVA analysis was carried out in two steps. First, the LF of the conceptual TVA was fixed at 0.07 LF with the TVA mass varying. The result for this step has been plotted in Graph 4. Second, the mass of the TVAs was kept constant with a varying LF. These results are plotted in Graph 5.

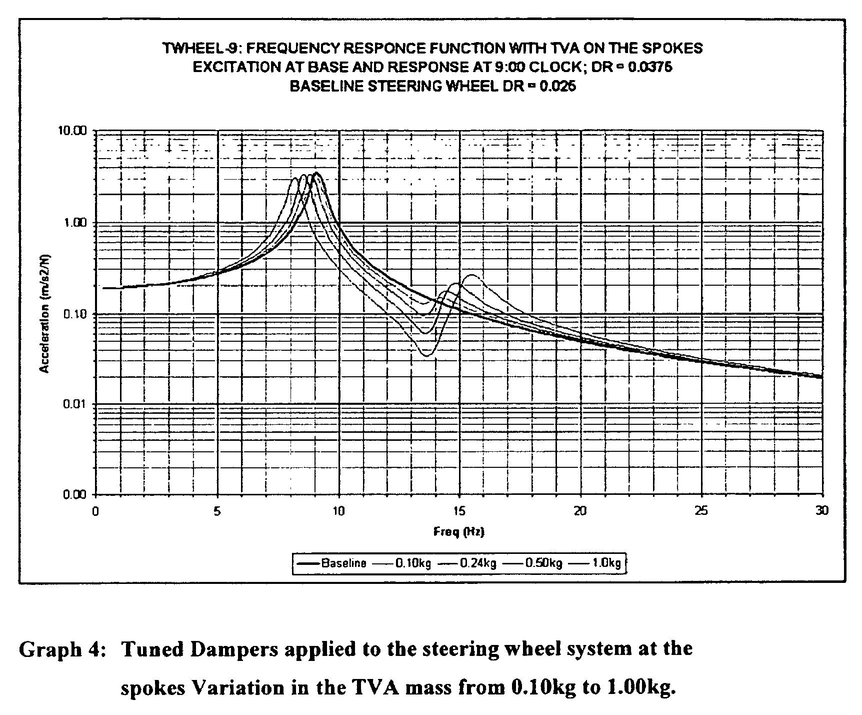

Some packaging constraints do not allow more than 0.50 kg of steel to be enclosed in the steering wheel spokes. The spectra in Graph 5 show the influence of LF on the 0.25kg and the 0.50kg TVA's. Partly based on Graphs 4 & 5, the 0.50 kg was chosen for the conceptual TVAs. The performance of the 0.24kg and 0.50kg TVA's has been further studied using the predicted Acceleration vs. Speed profile which accounts for the vehicle forcing function as well as the response of the steering wheel to predict the acceleration levels on the steering wheel during operation.

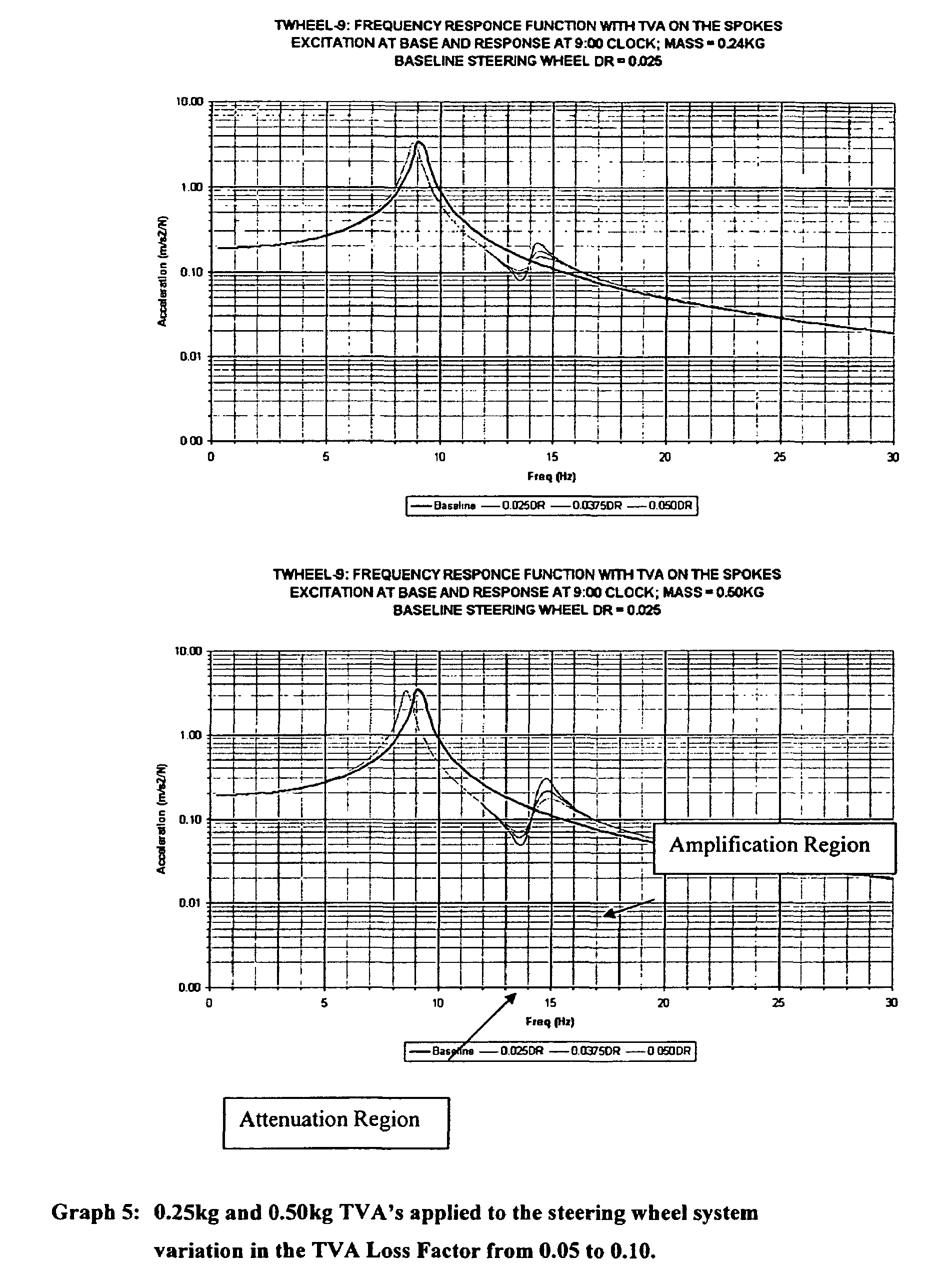

The 0.24kg and 0.50kg conceptual TVA's were initially analytically tuned to 13.75Hz and mounted on the steering wheel system via the FEA model. The resulting performance is plotted in Graphs 6 & 7 using a TVA LF of 0.05.

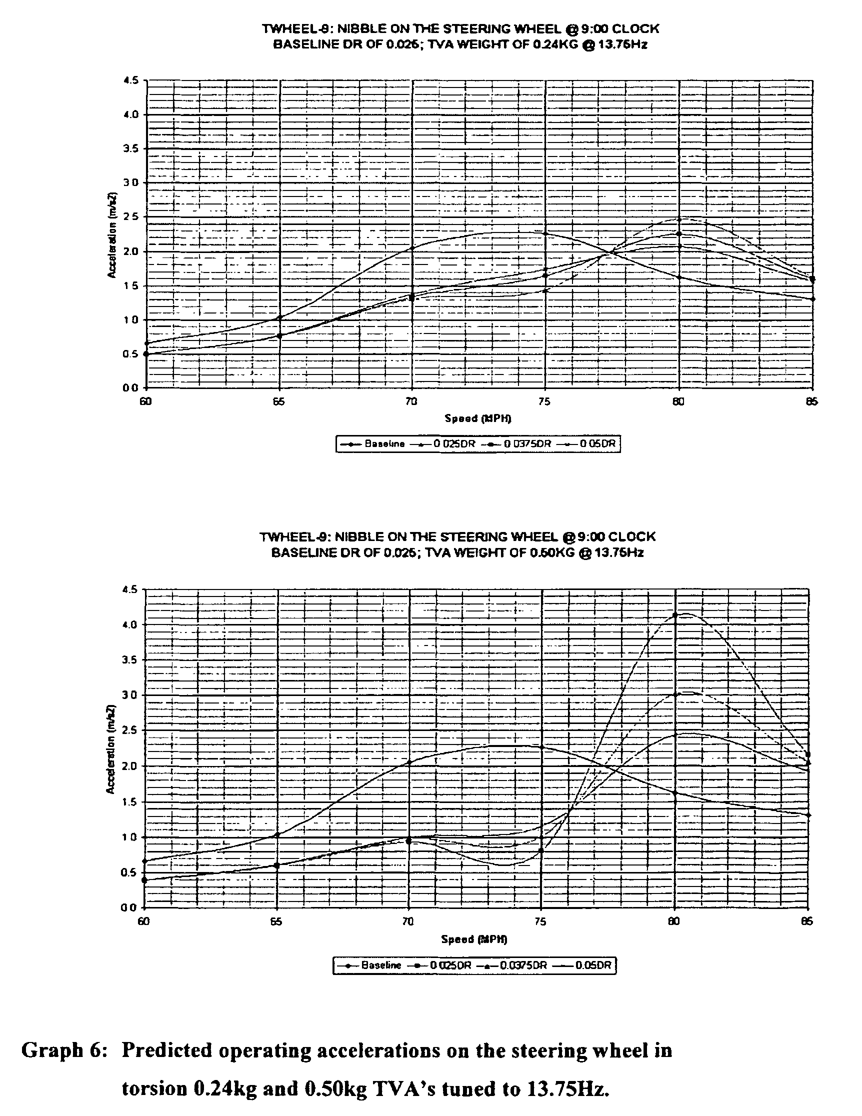

As demonstrated in the plots of Graph 6, the TVA "amplification region" is an issue at high speeds and must be managed.

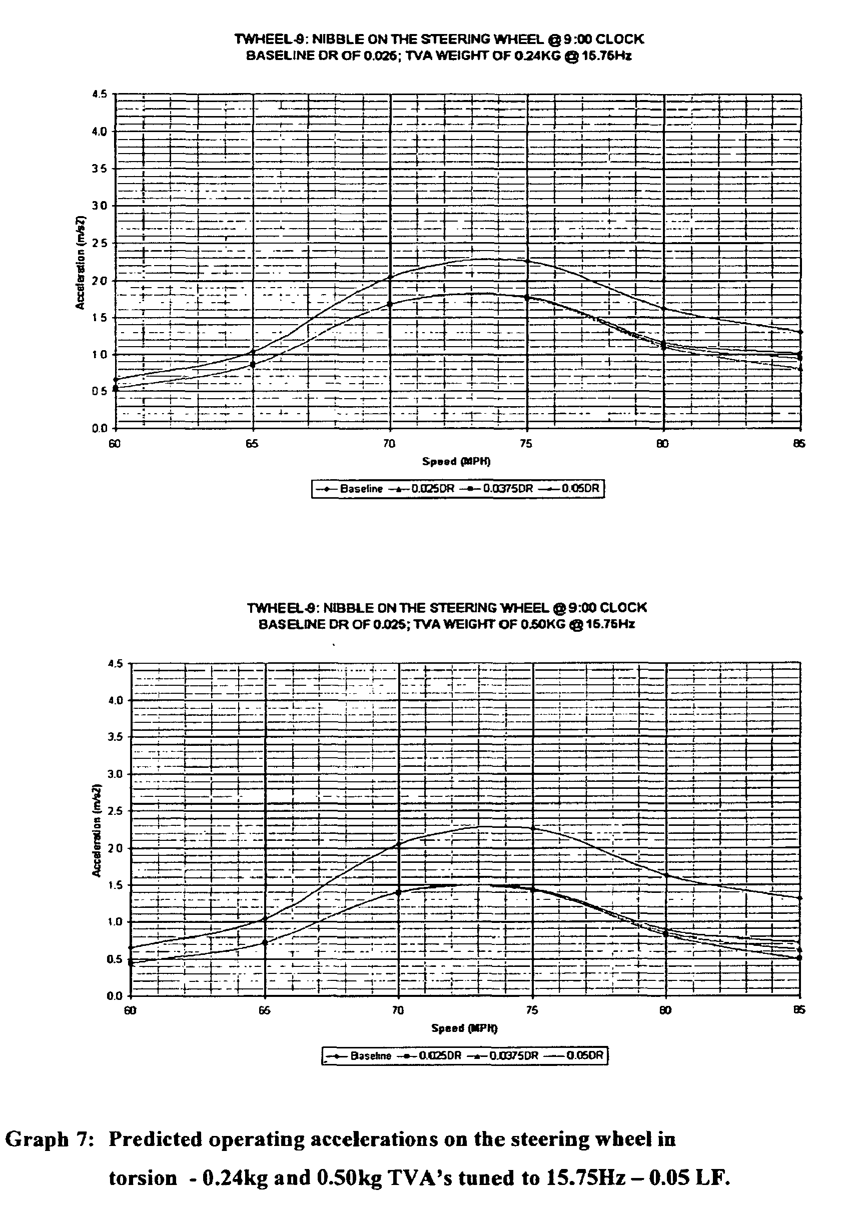

Compared to tuning the TVAs at 13.75Hz, this configuration provides good attenuation in the TVA amplification region.

Further trials with the TVA tuning frequency and mass have provided a better understanding of the acceleration-speed profile. Graph 8 depicts the performance of the 0.50kg TVA tuned to 14.75Hz.

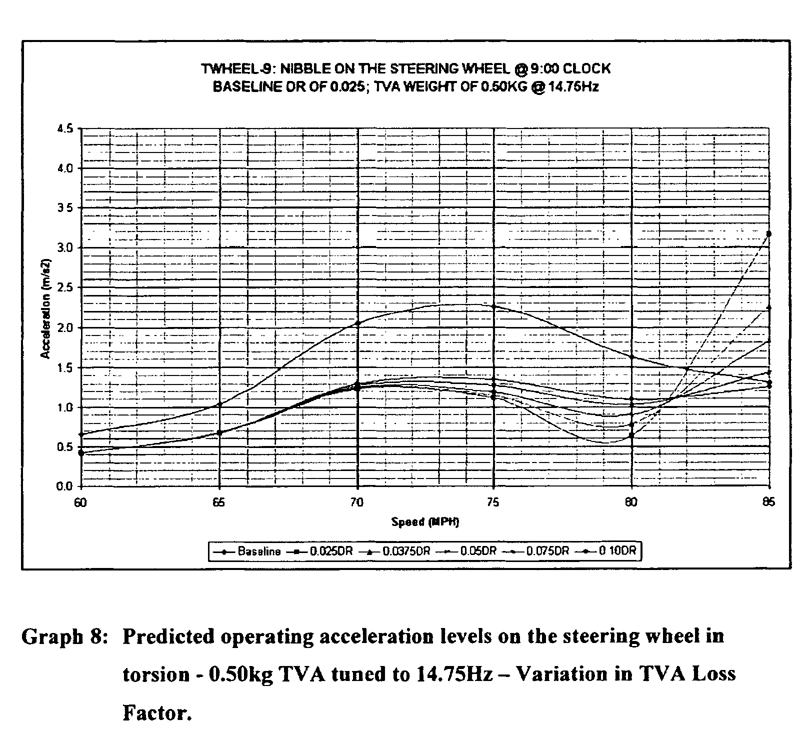

The conceptual TVA provides the best nibble reduction using total TVA mass of 0.50 kg (both TVAs) and a loss factor of about 0.10 LF (Damping Ratio of 0.05). Increased TVA damping improves the high-speed torsion response of the steering wheel, but diminishes attenuation in the 74 mph (peak) region. A TVA loss factor of about 0.10 LF is a good compromise.

An acceleration vs. speed analysis was done with added dead-mass on the spokes using the FEA model. 0.24kg and 0.50kg masses were added to the spokes of the steering wheel system. The associated performance has been plotted in Graph 9 below. The plot shows no significant benefit relative to attenuation performance.

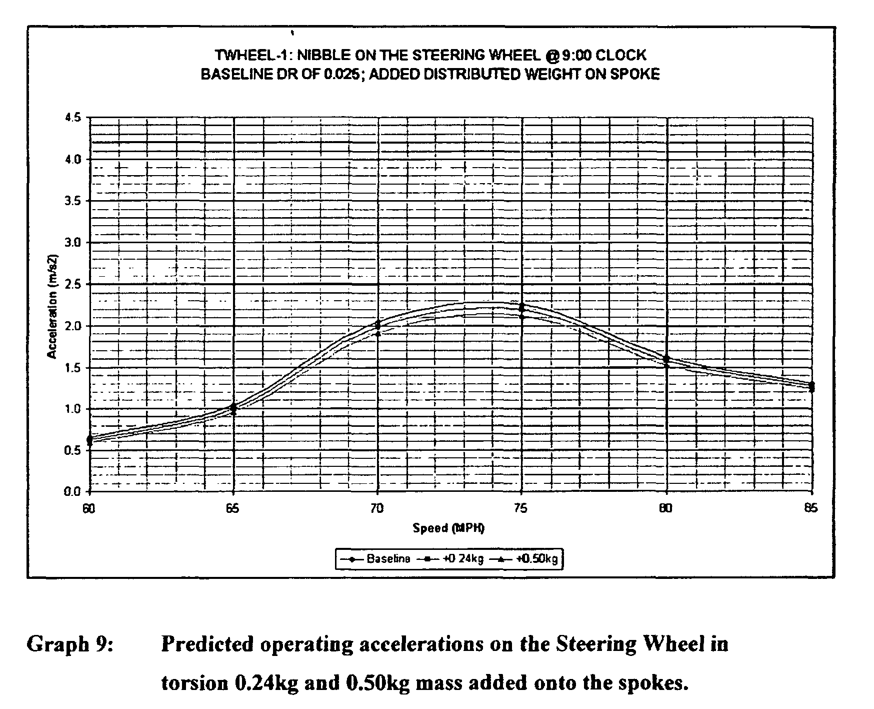

### TVA DESIGN

The performances of the conceptual TVA's were taken into consideration during the detailed design and verification of the TVA. A plot of the initial TVA design is shown in Graph 10.

***Trial 1:*** A TVA of length 0.093m was mounted on the steering wheel. The TVA consisted of 4 springs, two on each side of the mass. The model utilized 0.005" thick springs with a constant width of 0.375". A 0.25Kg mass was fixed in the middle of the four springs.
The performance of Trial 1 is plotted in Graph 10.

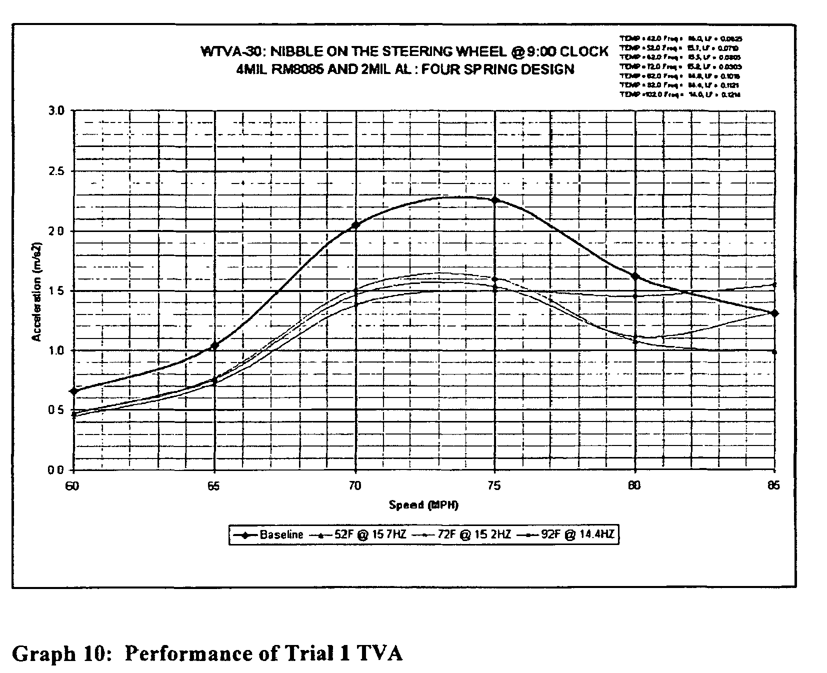

A comparison of Graphs 8 and 10 shows a reduction in performance. Some of the factors affecting the performance in the detailed design of the TVA include the exact location and exact mounting conditions. Note that it would probably most efficient if the anchor locations could be as far as possible out toward the steering wheel rim, such that TVA forces are imparted most efficientty to the wheel. However in any design, there are practical limitations. The conceptual TVA in Phase I of the project was a simplification of these practical issues. The amplitudes of the predicted acceleration on the steering wheel rim associated with this TVA configuration are as below:

| Speed (MPH) | 52F | 72F | 92F |
|---|---|---|---|
| 60 | 0.43 | 0.46 | 0.44 |
| 65 | 0.77 | 0.75 | 0.72 |
| 70 | 1.51 | 1.46 | 1.37 |
| 75 | 1.60 | 1.53 | 1.49 |
| 80 | 1.07 | 1.11 | 1.45 |
| 85 | 0.98 | 1.31 | 1.54 |

***Trial** 2*: To improve the performance above that of Trial 1, the TVA design was modified as below. The new design consisted of two springs holding onto each 0.25Kg mass in a cantilever fashion.

The performance of Trial 2 TVA has been plotted in Graph 11 below.

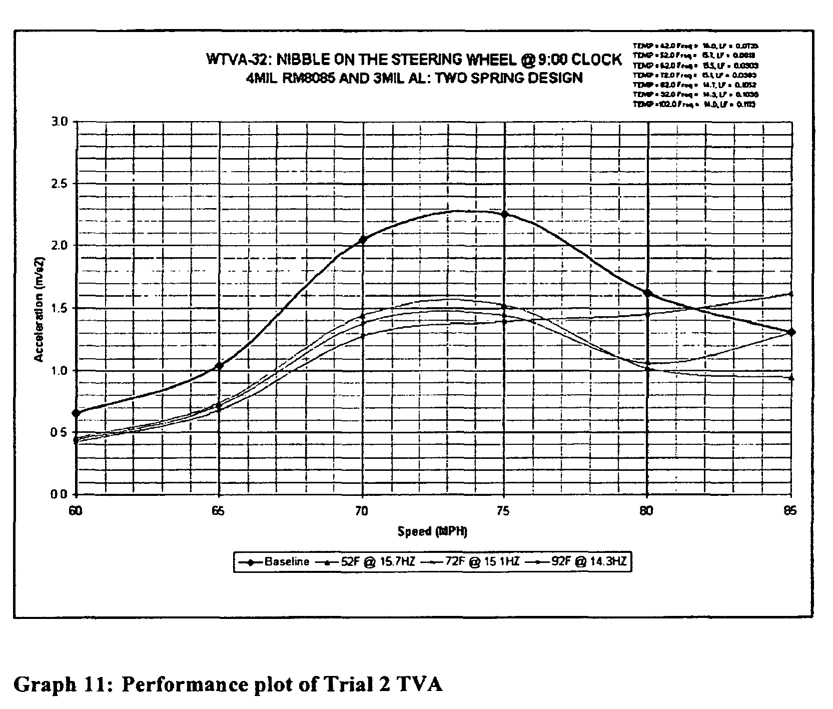

***Trial 3:*** The TVA design from Trial 1 was modified to a shorter length of 0.075m. The decrease in length moves the center of gravity of the TVA mass towards the steering wheel rim. This design increases the performance of the TVA when compared to Trial 1.

Performance plot for Trial 3 design has been plotted in Graph 12 below.

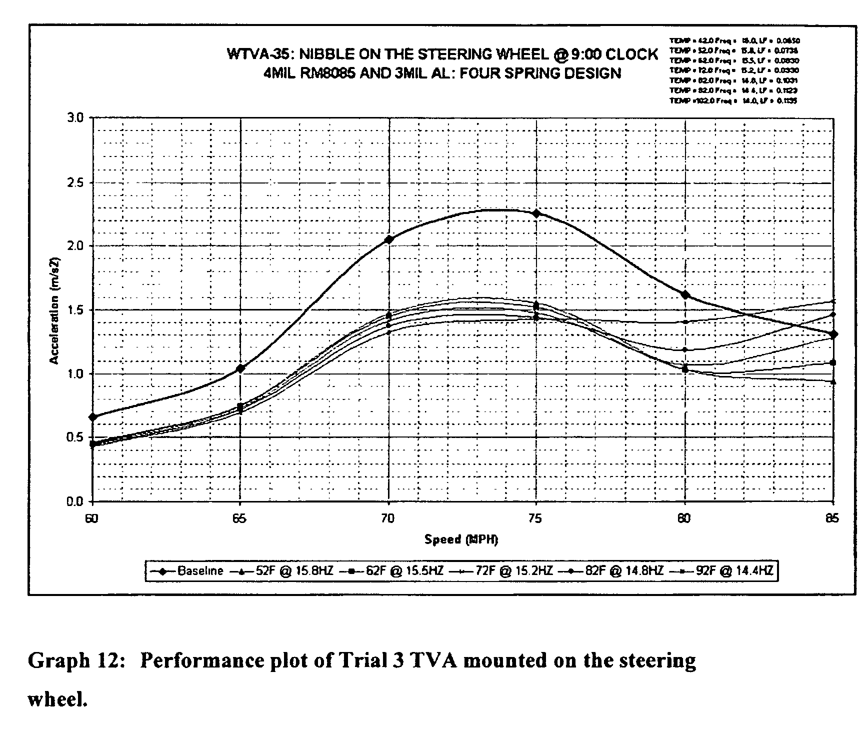

The design utilizes 0.006" thick springs with a width of 0.25". The predicted acceleration levels on the steering wheel rim are as follows:

| Speed (MPH) | 52F | 62F | 72F | 82F | 92F |
|---|---|---|---|---|---|
| 60 | 0.45 | 0.45 | 0.44 | 0.44 | 0.43 |
| 65 | 0.75 | 0.74 | 0.73 | 0.71 | 0.69 |
| 70 | 1.46 | 1.44 | 1.41 | 1.37 | 1.32 |
| 75 | 1.55 | 1.52 | 1.48 | 1.44 | 1.42 |
| 80 | 1.03 | 1.03 | 1.06 | 1.18 | 1.41 |
| 85 | 0.94 | 1.08 | 1.27 | 1.46 | 1.56 |

The predicted response of the TVA as a function of temperature (predicted analytically) is shown in Graph 13.

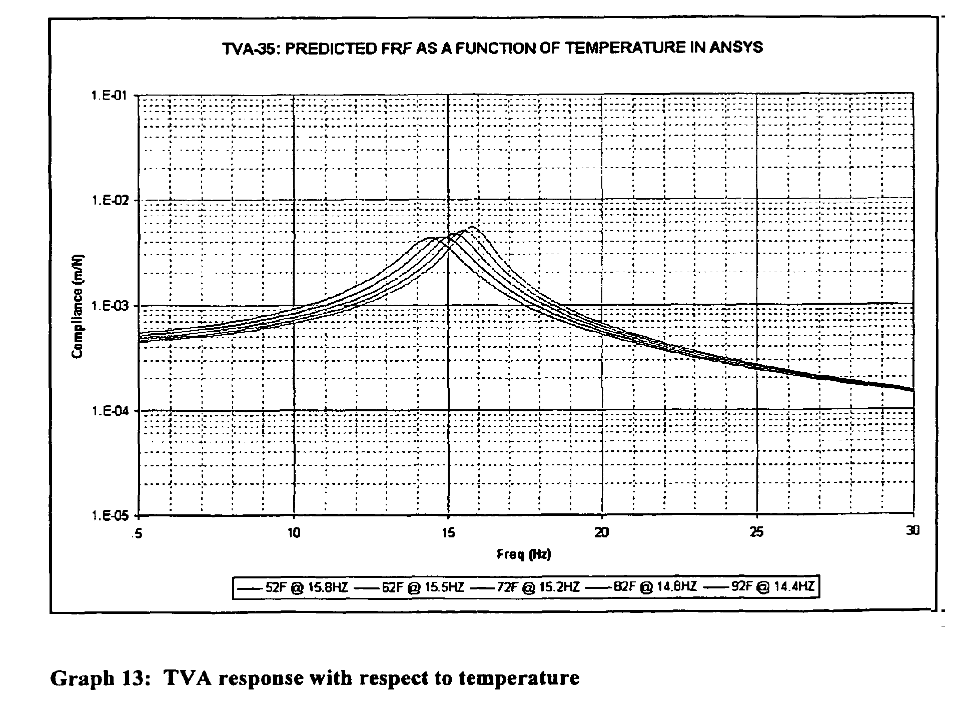

### TVA resonance frequencies and loss factors as predicted in Ansys are as below:

| Temp(F) | Freq(Hz) | LF |
|---|---|---|
| 52.0 | 15.8 | 0.0736 |
| 62.0 | 15.5 | 0.0830 |
| 72.0 | 15.2 | 0.0930 |
| 82.0 | 14.8 | 0.1031 |
| 92.0 | 14.4 | 0.1123 |

Graphs 14 & 15 show the FRF's for TVA-A and TVA-B respectively.

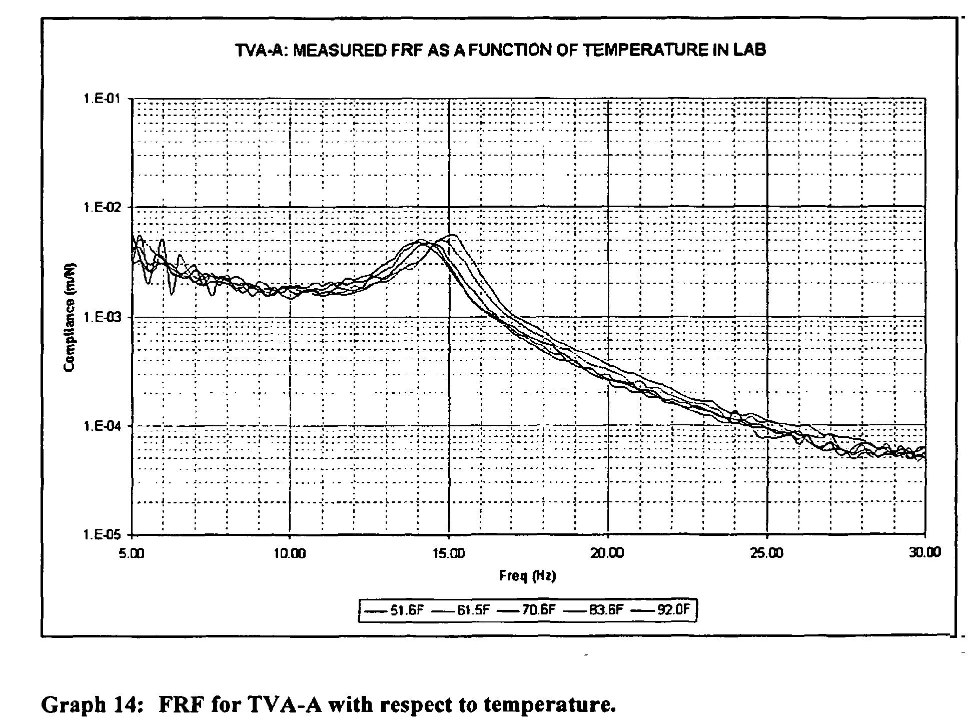

The measured TVA resonance frequency and loss factors (as a function of temperature) for TVA-A are as below:

| Temp(F) | Freq(Hz) | LF |
|---|---|---|
| 51.6 | 15.00 | 0.0783 |
| 61.5 | 14.75 | 0.0813 |
| 70.6 | 14.50 | 0.0948 |
| 83.6 | 14.25 | 0.1000 |
| 92.0 | 14.25 | 0.0982 |

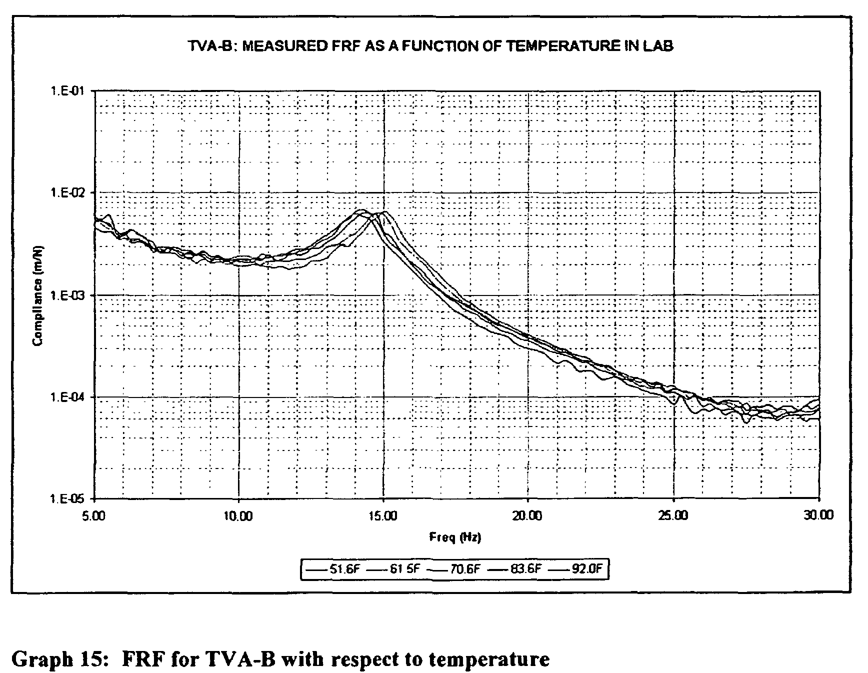

The measured TVA resonance frequency and loss factors (as a function of temperature) for TVA-B are as below:

| Temp(F) | Freq(Hz) | LF |
|---|---|---|
| 51.6 | 15.00 | 0.0733 |
| 61.5 | 14.75 | 0.0745 |
| 70.6 | 14.50 | 0.0896 |
| 83.6 | 14.25 | 0.1017 |
| 92.0 | 14.25 | 0.0929 |

The experimentally measured TVA tuning frequencies and loss factor values were back-inserted into the Ansys FEA program for the steering wheel system to predict the anticipated performance in road trials. The acceleration-speed profile obtained from the analysis has been plotted in Graph 16.

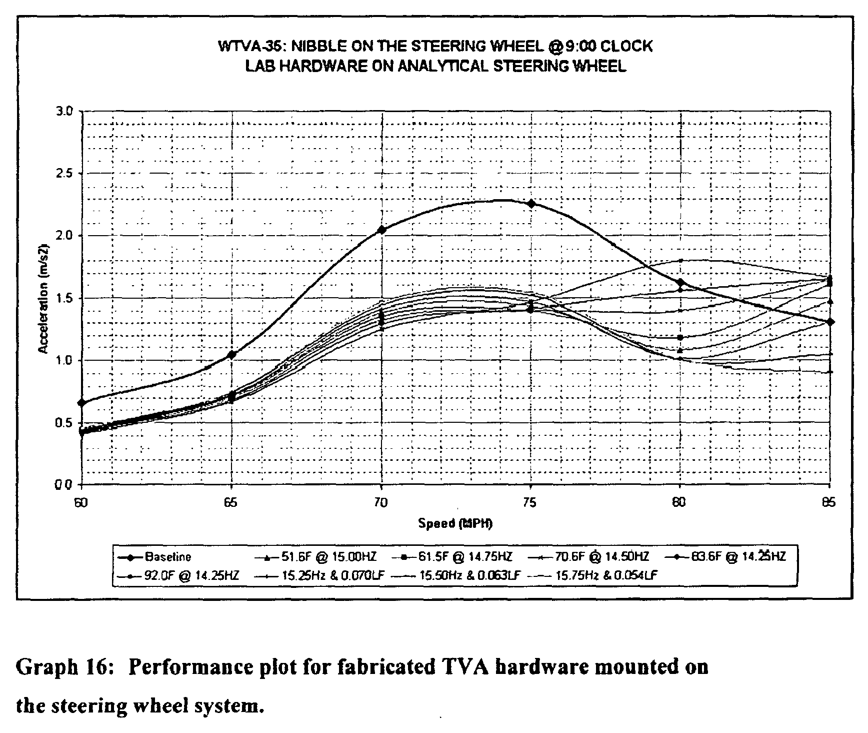

The predicted acceleration levels on the steering wheel using the prototype TVA hardware are as follows,

| Speed (MPH) | 51.6F | 61.5F | 70.6F | 83.6F | 92F |
|---|---|---|---|---|---|
| 60 | 0.44 | 0.43 | 0.43 | 0.42 | 0.41 |
| 65 | 0.72 | 0.71 | 0.69 | 0.68 | 0.66 |
| 70 | 1.38 | 1.35 | 1.32 | 1.29 | 1.24 |
| 75 | 1.43 | 1.40 | 1.39 | 1.41 | 1.47 |
| 80 | 1.07 | 1.17 | 1.39 | 1.55 | 1.79 |
| 85 | 1.47 | 1.60 | 1.64 | 1.65 | 1.67 |

Performance of the TVA increases with mass, as would be expected. Two TVAs, each weighing 0.25 kg, provides significantly better attenuation than 0.12 kg TVAs do. The more TVA mass, the better the performance. Also, the larger the TVA mass, the stiffer (i.e. larger and more robust) the TVA springs, which is attractive from a manufacturing and handling standpoint. However, a 0.25 kg TVA mass is at the upper limit of what can be packaged in the current available space for spoke mounted TVAs, if steel is utilized for the TVA mass. Of course and as applications may require, other masses may be used for the TVAs.

In some applications analytical results show that 0.50kg dead mass in the spokes does not provide significant improvement for the nibble issue.

Adequate damping can be provided in the steel TVA springs via a constrained layer damping system (CLDS). This CLDS maintains adequate TVA tuning and loss factor over a temperature range of 50 F to 90 F.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A vibration dampening device (40) configured for mounting to a steering wheel (22), comprising:
a pair of masses (42) each having a pair of springs (44) mounted thereto, each spring comprising a pair of mounting ends (56) depending away from the mass;
a pair of mounting members (46) each being configured to receive and engage one of the pair of mounting ends, wherein the vibration dampening device is configured for movement in a direction that reduces a torsional vibration input into the steering wheel.

2. The vibration dampening device as in claim 1, wherein the pair of springs are coated with a polymer that provides a dampening effect to the springs and the springs are planar members configured for movement in a single plane.

3. The vibration dampening device as in claim 1, wherein each of the masses comprises a central portion (42), a first shroud portion (48) and a second shroud portion (48), wherein a portion of one of the pair of springs is secured between the central portion and the first shroud portion and a portion of the other one of the pair of springs is secured between the central portion and the second shroud portion.

4. The vibration dampening device as in claim 3, wherein the first shroud portion has a different configuration than the second shroud portion and each shroud portion is configured to allow movement of the vibration damping device.

5. The vibration dampening device as in claim 4, wherein each mounting member comprises a central mounting portion (64) with a mounting opening (68) and a pair of end portions (60) each being configured to be secured to the central mounting portion wherein each mounting end is secured between the central mounting portion and one of the end portions and each mass weighs approximately 250 grams.

6. The vibration dampening device as in claim 1, wherein the pair of masses are formed from steel and each mass comprises a central portion, a first shroud portion and a second shroud portion, wherein a portion of one of the pair of springs is secured between the central portion and the first shroud portion and a portion of the other one of the pair of springs is secured between the central portion and the second shroud portion.

7. The vibration dampening device as in claim 1, wherein the pair of masses are formed from any one of the following: iron; copper; tungsten; or any combination thereof and the vibration damping device is tuned to provide dampening at frequencies within a range defined by 11Hz to 17 Hz.

8. The vibration dampening device as in claim 1, wherein the pair of masses are formed from polymers loaded with any one of the following: steel; iron; copper; tungsten; or any combination thereof.

9. The vibration dampening device as in claim 1, wherein the pair of springs are siloxane foam springs and the pair of masses are formed from any one of the following: iron; copper; tungsten; or any combination thereof.

10. The vibration dampening device as in claim 1, wherein the pair of masses are formed from polymers loaded with any one of the following: steel; iron; copper; tungsten; or any combination thereof and the pair of springs are siloxane foam springs.

11. The vibration dampening device as in claim 1, wherein the pair of vibration dampening devices are configured for movement in directions corresponding to radial movement of the steering wheel.

12. A steering wheel (22) for a vehicle, comprising:
a steering wheel frame having an inner hub (30), an outer rim (32) and a pair of spokes (34) connecting the inner hub with the outer rim;
a pair of vibration dampening devices (40) one for each of the pair of spokes, each vibration mounting device comprising:
a pair of masses (42) each having a pair of springs (44) mounted thereto, each spring comprising a pair of mounted ends (56) depending away from the mass;
a pair of mounting members (46) each being configured to receive and engage one of the pair of mounting ends of the pair of springs, wherein, the vibration dampening device reduces the torsional vibration input into the steering wheel.

13. The steering wheel as in claim 12, wherein the pair of vibration dampening devices are mounted to a lower surface of the pair of spokes and the pair of vibration dampening devices are configured for movement in directions corresponding to radial movement of the steering wheel (22).

14. The steering wheel as in claim 12, wherein the pair of springs are coated with a polymer that provides a dampening effect to the springs.

15. The steering wheel as in claim 12, wherein the pair of masses are formed from steel and the mass comprises a central portion (42), a first shroud portion (48) and a second shroud portion (48), wherein a portion (56) of one of the pair of springs is secured between the central portion and the first shroud portion and a portion of the other one of the pair of springs is secured between the central portion and the second shroud portion.

16. The steering wheel as in claim 12, wherein the pair of vibration dampening devices are configured for movement in directions corresponding to radial movement of the steering wheel.

17. The steering wheel as in claim 12, wherein the pair of masses are formed from any one of the following: iron; copper; tungsten; or any combination thereof.

18. The steering wheel as in claim 12, wherein the pair of masses are formed from polymers loaded with any one of the following: steel; iron; copper; tungsten; or any combination thereof and the vibration damping devices are tuned to provide dampening at frequencies within a range defined by 11 Hz to 17 Hz.

19. The steering wheel as in claim 12, wherein the pair of springs are siloxane foam springs and the pair of masses are formed from steel and each mass weighs approximately 250 grams.

20. The steering wheel as in claim 12, wherein each vibration damping device is mounted to a receiving area (74) disposed in a lower surface (50) of the spokes, wherein each spoke comprises a pair of walls (72) for defining the receiving area and the receiving area is configured to allow movement of the vibration damping device therein.

21. The steering wheel as in claim 20, wherein each vibration device is enclosed within the receiving area by a lower shroud (36) that comprises a portion of the exterior surface of the lower surface of the spokes and the pair of vibration dampening devices are configured for movement in directions corresponding to radial movement of the steering wheel.

22. A method for dampening vibrations in a steering wheel (22) of a vehicle (12), comprising:
locating a pair of vibration damping devices (40) on a lower surface (50) of the steering wheel;
disposing one of each of the pair of vibration damping devices in a receiving area (74) disposed within a spoke (34) of the steering wheel, the receiving area being configured to allow movement of the vibration damping device therein; and
covering each vibration damping device with a shroud (36) that comprises a portion of the exterior surface of the lower surface of the spoke of the steering wheel wherein the pair of vibration dampening devices are configured for movement in directions corresponding to radial movement of the steering wheel, wherein the vibration damping devices are tuned to provide dampening at frequencies within a range defined by 11Hz to 17 Hz.

## Patentansprüche

1. Schwingungsdämpfungsvorrichtung (40), die zur Montage an ein Lenkrad (22) eingerichtet ist, umfassend:
ein Paar Massen (42), die jeweils ein Paar daran montierte Federn (44) aufweisen, wobei jede Feder ein Paar Montageenden (56) aufweist, die von der Masse weg abstehen;
ein Paar Montageelemente (46), die jeweils eingerichtet sind, um eines von dem Paar Montageenden aufzunehmen und mit diesem in Eingriff zu stehen, wobei die Schwingungsdämpfungsvorrichtung zur Bewegung in eine Richtung eingerichtet ist, die einen Torsionsschwingungseintrag in das Lenkrad vermindert.

2. Schwingungsdämpfungsvorrichtung nach Anspruch 1, wobei das Paar Federn mit einem Polymer beschichtet ist, das den Federn einen Dämpfungseffekt verleiht, und die Federn planare Elemente sind, die zur Bewegung in einer einzigen Ebene eingerichtet sind.

3. Schwingungsdämpfungsvorrichtung nach Anspruch 1, wobei jede der Massen einen zentralen Abschnitt (42), einen ersten Abdeckungsabschnitt (48) und einen zweiten Abdeckungsabschnitt (48) umfasst, wobei ein Abschnitt von einer von dem Paar Federn zwischen dem zentralen Abschnitt und dem ersten Abdeckungsabschnitt befestigt ist, und ein Abschnitt von der anderen von dem Paar Federn zwischen dem zentralen Abschnitt und dem zweiten Abdeckungsabschnitt befestigt ist.

4. Schwingungsdämpfungsvorrichtung nach Anspruch 3, wobei der erste Abdeckungsabschnitt eine andere Ausgestaltung als der zweite Abdeckungsabschnitt aufweist, und jeder Abdeckungsabschnitt eingerichtet ist, um eine Bewegung der Schwingungsdämpfungsvorrichtung zuzulassen.

5. Schwingungsdämpfungsvorrichtung nach Anspruch 4, wobei jedes Montageelement einen zentralen Montageabschnitt (64) mit einer Montageöffnung (68) und ein Paar Endabschnitte (60) umfasst, von denen jeder zur Befestigung an dem zentralen Montageabschnitt eingerichtet ist, wobei jedes Montageende zwischen dem zentralen Montageabschnitt und einem der Endabschnitte befestigt ist, und jede Masse etwa 250 g wiegt.

6. Schwingungsdämpfungsvorrichtung nach Anspruch 1, wobei das Paar Massen aus Stahl gebildet ist, und jede Masse einen zentralen Abschnitt, einen ersten Abdeckungsabschnitt und einen zweiten Abdeckungsabschnitt umfasst, wobei ein Abschnitt von einer von dem Paar Federn zwischen dem zentralen Abschnitt und dem ersten Abdeckungsabschnitt befestigt ist, und ein Abschnitt von der anderen von dem Paar Federn zwischen dem zentralen Abschnitt und dem zweiten Abdeckungsabschnitt befestigt ist.

7. Schwingungsdämpfungsvorrichtung nach Anspruch 1, wobei das Paar Massen aus irgendeinem der Folgenden gebildet ist: Eisen; Kupfer; Wolfram; oder irgendeine Kombination davon, und die Schwingungsdämpfungsvorrichtung abgestimmt ist, um eine Dämpfung bei Frequenzen in einem durch 11 Hz bis 17 Hz definierten Bereich bereitzustellen.

8. Schwingungsdämpfungsvorrichtung nach Anspruch 1, wobei das Paar Massen aus Polymeren gebildet ist, die mit irgendeinem der Folgenden gefüllt sind: Stahl; Eisen; Kupfer; Wolfram; oder irgendeine Kombination davon.

9. Schwingungsdämpfungsvorrichtung nach Anspruch 1, wobei das Paar Federn Siloxanschaumfedern ist, und das Paar Massen aus irgendeinem der Folgenden gebildet ist: Eisen; Kupfer; Wolfram; oder irgendeine Kombination davon.

10. Schwingungsdämpfungsvorrichtung nach Anspruch 1, wobei das Paar Massen aus Polymeren gebildet ist, die mit irgendeinem der Folgenden gefüllt sind: Stahl; Eisen; Kupfer; Wolfram; oder irgendeine Kombination davon, und das Paar Federn Siloxanschaumfedern ist.

11. Schwingungsdämpfungsvorrichtung nach Anspruch 1, wobei das Paar Schwingungsdämpfungsvorrichtungen zur Bewegung in Richtungen eingerichtet ist, die einer radialen Bewegung des Lenkrads entsprechen.

12. Lenkrad (22) für ein Fahrzeug, umfassend:
einen Lenkradrahmen mit einer inneren Nabe (30), einem äußeren Kranz (32) und einem Paar Speichen (34), die die innere Nabe mit dem äußeren Kranz verbinden;
ein Paar Schwingungsdämpfungsvorrichtungen (40), und zwar eine für jede von dem Paar Speichen, wobei jede Schwingungsdämpfungsvorrichtung umfasst:
ein Paar Massen (42), die jeweils ein Paar darin befestigte Federn (44) aufweisen, wobei jede Feder ein Paar Montageenden (56) aufweist, die von der Masse weg abstehen;
ein Paar Montageelemente (46), die jeweils eingerichtet sind, um eines von dem Paar Montageenden des Paars Federn aufzunehmen und mit diesem in Eingriff zu stehen, wobei die Schwingungsdämpfungsvorrichtung den Torsionsschwingungseintrag in das Lenkrad vermindert.

13. Lenkrad nach Anspruch 12, wobei das Paar Schwingungsdämpfungsvorrichtungen an einer unteren Oberfläche des Paars Speichen montiert ist, und das Paar Schwingungsdämpfungsvorrichtungen zur Bewegung in Richtungen eingerichtet ist, die einer radialen Bewegung des Lenkrads (22) entsprechen.

14. Lenkrad nach Anspruch 12, wobei das Paar Federn mit einem Polymer beschichtet ist, das den Federn einen Dämpfungseffekt verleiht.

15. Lenkrad nach Anspruch 12, wobei das Paar Massen aus Stahl gebildet ist und die Masse einen zentralen Abschnitt (42), einen ersten Abdeckungsabschnitt (48) und einen zweiten Abdeckungsabschnitt (48) umfasst, wobei ein Abschnitt (56) von einer von dem Paar Federn zwischen dem zentralen Abschnitt und dem ersten Abdeckungsabschnitt befestigt ist, und ein Abschnitt von der anderen von dem Paar Federn zwischen dem zentralen Abschnitt und dem zweiten Abdeckungsabschnitt befestigt ist.

16. Lenkrad nach Anspruch 12, wobei das Paar Schwingungsdämpfungsvorrichtungen zur Bewegung in Richtungen eingerichtet ist, die einer radialen Bewegung des Lenkrads entsprechen.

17. Lenkrad nach Anspruch 12, wobei das Paar Massen aus einem der Folgenden gebildet ist: Eisen; Kupfer; Wolfram; oder irgendeine Kombination davon.

18. Lenkrad nach Anspruch 12, wobei das Paar Massen aus Polymeren gebildet ist, die mit irgendeinem der Folgenden gefüllt sind: Stahl; Eisen; Kupfer; Wolfram; oder irgendeine Kombination davon, und die Schwingungsdämpfungsvorrichtungen abgestimmt sind, um eine Dämpfung bei Frequenzen in einem durch 11 Hz bis 17 Hz definierten Bereich bereitzustellen.

19. Lenkrad nach Anspruch 12, wobei das Paar Federn Siloxanschaumfedern ist, und das Paar Massen aus Stahl gebildet ist, und jede Masse etwa 250 g wiegt.

20. Lenkrad nach Anspruch 12, wobei jede Schwingungsdämpfungsvorrichtung an einem Aufnahmebereich (74) montiert ist, der in einer unteren Fläche (50) der Speichen angeordnet ist, wobei jede Speiche ein Paar Wände (72) umfasst, um den Aufnahmebereich zu definieren, und der Aufnahmebereich eingerichtet ist, um eine Bewegung der Schwingungsdämpfungsvorrichtung darin zuzulassen.

21. Lenkrad nach Anspruch 20, wobei jede Schwingungsdämpfungsvorrichtung in dem Aufnahmebereich durch einen unteren Mantel (36) eingeschlossen ist, der einen Abschnitt der Außenfläche der unteren Fläche der Speichen umfasst, und das Paar Schwingungsdämpfungsvorrichtungen zur Bewegung in Richtungen eingerichtet ist, die einer radialen Bewegung des Lenkrads entsprechen.

22. Verfahren zum Dämpfen von Schwingungen in einem Lenkrad (22) eines Fahrzeugs (12), das umfasst, dass:
ein Paar Schwingungsdämpfungsvorrichtungen (40) an einer unteren Fläche (50) des Lenkrads angeordnet wird;
eine jede von dem Paar Schwingungsdämpfungsvorrichtungen in einem Aufnahmebereich (74) positioniert wird, der in einer Speiche (34) des Lenkrads positioniert ist, wobei der Aufnahmebereich eingerichtet ist, um eine Bewegung der Schwingungsdämpfungsvorrichtung darin zuzulassen; und
jede Schwingungsdämpfungsvorrichtung mit einem Mantel (36) abgedeckt wird, der einen Abschnitt der Außenfläche der unteren Fläche der Speiche des Lenkrads umfasst, wobei das Paar Schwingungsdämpfungsvorrichtungen zur Bewegung in Richtungen eingerichtet wird, die einer radialen Bewegung des Lenkrads entsprechen, wobei die Schwingungsdämpfungsvorrichtungen abgestimmt werden, um eine Dämpfung bei Frequenzen in einem durch 11 Hz bis 17 Hz definierten Bereich bereitzustellen.

## Revendications

1. Dispositif amortisseur de vibration (40) configuré de manière à être monté sur un volant de direction (22), comprenant :
une paire de masses (42) sur chacune desquelles est montée une paire de ressorts (44), chaque ressort comprenant une paire d'extrémités de montage (56) dépendant de la masse ;
une paire d'éléments de montage (46) chacun étant configuré de manière à recevoir l'une de la paire d'extrémités de montage et à se coupler à celle-ci, dans lequel le dispositif amortisseur de vibration est configuré avec une liberté de déplacement dans une direction qui réduit une entrée de vibration en torsion sur le volant de direction.

2. Dispositif amortisseur de vibration selon la revendication 1, dans lequel la paire de ressorts est revêtue d'un polymère qui produit un effet d'amortissement sur les ressorts et les ressorts sont des éléments plans configurés avec une liberté de déplacement dans un seul plan.

3. Dispositif amortisseur de vibration selon la revendication 1, dans lequel chacune des masses comprend une partie centrale (42), une première partie d'enveloppe de protection (48) et une seconde partie d'enveloppe de protection (48), dans lequel une partie d'un premier de la paire de ressorts est fixée entre la partie centrale et la première partie d'enveloppe de protection et une partie de l'autre de la paire de ressorts est fixée entre la partie centrale et la seconde partie d'enveloppe de protection.

4. Dispositif amortisseur de vibration selon la revendication 3, dans lequel la première partie d'enveloppe de protection présente une configuration différente de la seconde partie d'enveloppe de protection et chaque partie d'enveloppe de protection est configurée afin de permettre le déplacement du dispositif amortisseur de vibration.

5. Dispositif amortisseur de vibration selon la revendication 4, dans lequel chaque élément de montage comprend une partie de montage centrale (64) avec une ouverture de montage (68) et une paire de parties d'extrémités (60), chacune étant configurée de manière à être fixée sur la partie de montage centrale, dans lequel chaque extrémité de montage est fixée entre la partie de montage centrale et l'une des parties d'extrémités et chaque masse pèse approximativement 250 grammes.

6. Dispositif amortisseur de vibration selon la revendication 1, dans lequel la paire de masses est formée en acier et chaque masse comprend une partie centrale, une première partie d'enveloppe de protection et une seconde partie d'enveloppe de protection, dans lequel une partie d'un premier de la paire de ressorts est fixée entre la partie centrale et la première partie d'enveloppe de protection et une partie de l'autre de la paire de ressorts est fixée entre la partie centrale et la seconde partie d'enveloppe de protection.

7. Dispositif amortisseur de vibration selon la revendication 1, dans lequel la paire de masses est formée à partir de l'un quelconque des suivants : le fer ; le cuivre ; le tungstène ; ou d'un mélange quelconque de ceux-ci et le dispositif amortisseur de vibration est adapté de manière à assurer un amortissement à des fréquences à l'intérieur d'une plage définie entre 11 Hz et 17 Hz.

8. Dispositif amortisseur de vibration selon la revendication 1, dans lequel la paire de masses est formée à partir de polymères chargés par l'un quelconque des suivants : l'acier ; le fer ; le cuivre ; le tungstène ou un mélange quelconque de ceux-ci.

9. Dispositif amortisseur de vibration selon la revendication 1, dans lequel la paire de ressorts est constituée par des ressorts en mousse de siloxane et la paire de masses est formée à partir de l'un quelconque des suivants : le fer ; le cuivre ; le tungstène ou d'un mélange quelconque de ceux-ci.

10. Dispositif amortisseur de vibration selon la revendication 1, dans lequel la paire de masses est formée à partir de polymères chargés par l'un quelconque des suivants : l'acier ; le fer ; le cuivre ; le tungstène ou un mélange quelconque de ceux-ci et la paire de ressorts est constituée par des ressorts en mousse de siloxane.

11. Dispositif amortisseur de vibration selon la revendication 1, dans lequel la paire de dispositifs amortisseurs de vibration est configurée avec liberté de déplacement dans des directions correspondants au déplacement radial du volant de direction.

12. Volant de direction (22) pour un véhicule, comprenant :
une structure de volant de direction comportant un moyeu interne (30), une couronne externe (32) et une paire de bras (34) reliant le moyeu interne à la couronne externe ;
une paire de dispositifs amortisseurs de vibration (40) pour chacun de la paire de bras, chaque dispositif amortisseur de vibration comprenant :
une paire de masses (42) sur chacune desquelles est montée une paire de ressorts (44), chaque ressort comprenant une paire d'extrémités de montage (56) dépendant de la masse ;
une paire d'éléments de montage (46) chacun étant configuré de manière à recevoir l'une de la paire d'extrémités de montage de la paire de ressorts et à se coupler à celle-ci, dans lequel le dispositif amortisseur de vibration réduit l'entrée de vibration en torsion sur le volant de direction.

13. Volant de direction selon la revendication 12, dans lequel la paire de dispositifs amortisseurs de vibration est montée sur une surface inférieure de la paire de bras et la paire de dispositifs amortisseurs de vibration est configurée avec liberté de déplacement dans des directions correspondants au déplacement radial du volant de direction (22).

14. Volant de direction selon la revendication 12, dans lequel la paire de ressorts est revêtue avec un polymère qui assure un effet amortisseur sur les ressorts.

15. Volant de direction selon la revendication 12, dans lequel la paire de masses est formée en acier et la masse comprend une partie centrale (42), une première partie d'enveloppe de protection (48) et une seconde partie d'enveloppe de protection (48), dans lequel une partie (56) d'un premier de la paire de ressorts est fixée entre la partie centrale et la première partie d'enveloppe de protection et une partie de l'autre de la paire de ressorts est fixée entre la partie centrale et la seconde partie d'enveloppe de protection.

16. Volant de direction selon la revendication 12, dans lequel la paire de dispositifs amortisseurs de vibration est configurée avec liberté de déplacement dans des directions correspondants au déplacement radial du volant de direction.

17. Volant de direction selon la revendication 12, dans lequel la paire de masses est formée à partir de l'un quelconque des suivants : l'acier, le fer ; le cuivre ; le tungstène ou d'un mélange quelconque de ceux-ci.

18. Volant de direction selon la revendication 12, dans lequel la paire de masses est formée à base de polymères chargés par l'un quelconque des suivants : l'acier ; le fer ; le cuivre ; le tungstène ou un mélange quelconque de ceux-ci, et les dispositifs amortisseurs de vibration sont adaptés de manière à assurer un amortissement à des fréquences à l'intérieur d'une plage définie entre 11 Hz et 17 Hz.

19. Volant de direction selon la revendication 12, dans lequel la paire de ressorts est constituée par des ressorts en mousse de siloxane et la paire de masses est formée en acier et chaque masse pèse approximativement 250 grammes.

20. Volant de direction selon la revendication 12, dans lequel chaque dispositif amortisseur de vibration est monté dans une zone de réception (74) disposée sur une surface inférieure (50) des bras, dans lequel chaque bras comprend une paire de parois (72) destinées à définir la zone de réception, et la zone de réception est configurée afin de permettre le déplacement du dispositif de vibration à l'intérieur de cette dernière.

21. Volant de direction selon la revendication 20, dans lequel chaque dispositif amortisseur de vibration est intégré à l'intérieur de la zone de réception par une enveloppe de protection inférieure (36) qui comprend une partie de la surface extérieure de la surface inférieure des bras et la paire de dispositifs amortisseurs de vibration est configurée avec liberté de déplacement dans des directions correspondant au déplacement radial du volant de direction.

22. Procédé d'amortissement de vibration sur un volant de direction (22) d'un véhicule, comprenant :
le positionnement d'une paire de dispositifs d'amortisseurs de vibration (40) sur une surface inférieure (50) du volant de direction ;
l'agencement d'un de chacun de la paire de dispositifs d'amortisseurs de vibration dans une zone de réception (74) disposée à l'intérieur d'un bras (34) du volant de direction, la zone de réception étant configurée afin de permettre le mouvement du dispositif d'amortissement de vibration à l'intérieur ; et
le recouvrement de chaque dispositif amortisseur de vibration par une enveloppe de protection (36) qui comprend une partie de la surface extérieure de la surface inférieure du bras du volant de direction dans lequel la paire de dispositifs amortisseurs de vibration est configurée avec liberté de déplacement dans des directions correspondants au déplacement radial du volant de direction, dans lequel les dispositifs amortisseurs de vibration sont adaptés de manière à assurer un amortissement à des fréquences à l'intérieur d'une plage définie entre 11 Hz et 17 Hz.
